# EUROPÄISCHE PATENTSCHRIFT

(11) **EP 1 506 886 B1**
(45) Veröffentlichungstag und Bekanntmachung des Hinweises auf die Patenterteilung: **29.11.2006**
(21) Anmeldenummer: 04014792.8
(22) Anmeldetag: 24.06.2004
(51) Int. Cl.: B60H 1/00, B63J 2/04

(54) **Verfahren und Vorrichtung zum Kühlen von mobilen Wohnräumen, wie Wohnwagen, Booten und dergleichen im Standbetrieb**
Method and device for the cooling of mobile living spaces, such as caravans, boats or the like in standby mode
Procédé et dispositif pour réfrigération d'espaces mobiles, tels que caravanes, bateaux ou similaire en mode de veille

(30) Priorität: 09.08.2003 DE 10336767
(43) Veröffentlichungstag der Anmeldung: 16.02.2005
(73) Patentinhaber: WAECO International GmbH, 48282 Emsdetten (DE)
(72) Erfinder: Wähning, Peter Maria, 48282 Emsdetten (DE)
(74) Vertreter: Schumacher, Horst

(56) Entgegenhaltungen:
- DE-A- 3 036 806
- DE-A- 19 802 156
- DE-C- 19 535 290
- US-A- 3 760 601
- US-A- 4 497 240
- PATENT ABSTRACTS OF JAPAN Bd. 0090, Nr. 80 (M-370), 10. April 1985 (1985-04-10) & JP 59 209909 A (NIPPON DENSO KK), 28. November 1984 (1984-11-28)
- PATENT ABSTRACTS OF JAPAN Bd. 0060, Nr. 86 (M-131), 25. Mai 1982 (1982-05-25) & JP 57 022909 A (DIESEL KIKI CO LTD), 6. Februar 1982 (1982-02-06)
- PATENT ABSTRACTS OF JAPAN Bd. 0050, Nr. 83 (M-071), 30. Mai 1981 (1981-05-30) & JP 56 031809 A (DIESEL KIKI CO LTD), 31. März 1981 (1981-03-31)

## Beschreibung

Die Erfindung betrifft eine Dach-Klimaanlage für mobile Wohnräume, wie Wohnwagen, Boote und dergleichen, im Standbetrieb gemäß dem Oberbegriff von Anspruch 1 sowie ein Verfahren zum Kühlen von mobilen Wohnräumen, wie Wohnwagen, Boote und dergleichen, im Standbetrieb gemäß dem Oberbegriff des Anspruchs 8.

Gattungsgemäße Klimaanlagen für Wohnwagen und Wohnmobile sind als Kompakteinheiten als sogenannte Dach-Klimaanlagen auf dem Markt erhältlich. Ihre Aufgabe ist es, über zwei in der Wohnraumdecke vorgesehene Einström- und Ausströmverbindungsöffnungen eine sogenannte Umluftkühlung in dem Wohnraum zu ermöglichen. Hierzu weist die kompakte Dach-Klimaanlage einen elektrisch betriebenen Lüfter auf, der innerhalb eines vorzugsweise wärmeisolierten Gehäuses angeordnet ist, welches seinerseits außerhalb des Wohnraumes angeordnet ist, wobei zwei Strömungsverbindungsöffnungen den Wohnraum und das Gehäuse derart miteinander verbinden, dass nahe der Wohnraumdecke sich befindende Warmluft ausströmen und das Lüfterrad diese Luft nach Kühlung (mittels eines im dem Gehäuse [Wärmeaustauschergehäuse] vorgesehenen Verdampfers) der Klimaanlage in den Wohnraum zurückführen kann.

Dies geschieht mit nur minimaler Druckdifferenz, d.h. dass der gekühlte Luftstrom nur soviel Bewegungsenergie erhält, dass eine Umluftzirkulation innerhalb des Wohnraumes stattfindet und sich ein Überdruck gegenüber der Außenluft praktisch nicht aufbaut. Dadurch wird vermieden, dass Kälteenergie vergeudet wird, denn sie wird durch in dem Wohnraum stets vorhandene Lüftungsverbindungen zur Außenluft praktisch nicht entweichen. Ebenso wird an der Ausström-Verbindungsöffnung des Wohnraums zum Wärmeaustauschergehäuse ein nennenswerter Unterdruck vermieden, um das Einsaugen von wärmerer Außenluft über die Lüftungsverbindungen in den Wohnraum hinein zu vermeiden.

Eine solche am Markt erhältliche Dach-Klimaanlage verfügt im übrigen über einen Kältemittelkreislauf mit einem Kondensator auf der Warmseite und dem bereits genannten Verdampfer auf der Kaltseite eines Kompressors, wobei der Kondensator über einen eigenen Lüfter Außenluft ansaugt, an diese Wärme abgibt und die erwärmte Luft, die also noch wärmer als die Außenluft ist, der Umgebungsluft wieder zuführt. Alle Wärme abgebenden Aggregate, wie der Kompressor sowie der Kondensator nebst seinem Lüftermotor sind außerhalb des wärmeisolierten Wärmeaustauschergehäuses in einem die gesamte Dach-Klimaanlage umhüllenden Schutzgehäuse angeordnet.

Die DE 197 44 716 C1 offenbart eine Dachklimaanlage für Fahrzeuge, welche grundsätzlich aus einer Frischlufteinheit und einer Umlufteinheit besteht, welche einzeln je mit einem Gebläse und je einem eigenen Wärmetauscher ausgestattet ist. Die jeder Einheit eigens zugeordnete Luftsteuereinrichtung wird allein von der Saugwirkung des zugeordneten Gebläses zwischen ihrer ersten und zweiten Schwenkstellung bewegt.

Die DE 195 10 396 A1 offenbart eine Dachklimaanlage für Fahrzeuge, bei der eine Luftsteuerklappe zwischen einer Frischluftstellung und einer Umluftstellung aktiv hin und her geschwenkt werden kann. Das verwendete Kühlkonzept sieht vor, dass die Luftsteuereinrichtung gleichzeitig dafür sorgt, dass ein Teil der Rückluft aus dem Rücklufteinlass in den Abluftanschluss überführt wird. Je mehr Frischluftanteile durch die Klimaeinheit geleitet wird, umso weiter ist der Abluftauslass geöffnet - und umgekehrt.

Die DE 195 35 290 C2 beschreibt eine Dachklimaanlage für Fahrzeuge, bei der ebenfalls eine das Umschalten zwischen Frischluft und Umluft gestattende Klappe einem Wärmeaustauscher vorgeschaltet ist, so dass das nachgeschaltete Gebläse gekühlte Frischluft oder gekühlte Umluft in das Fahrzeug einleitet. Diese Druckschrift ist hinsichtlich des Lüftungskonzeptes darauf gerichtet, die verfügbare Höhe des Dachkanals durch Vorsehen einer Zwischenkammer nutzbar zu machen, die in zwei übereinander liegende Kammern unterteilt ist Zu diesem Zweck ist mindestens ein Radialventilator austrittsseitig der oberen Kammer und mindestens ein Radialventilator austrittsseitig der unteren Kammer zugeordnet.

Dach-Klimaanlagen verbrauchen erhebliche Mengen an elektrischer Energie. Diese steht für mobile Wohnräume, wie Wohnwagen, Wohnmobile, Boote und dergleichen, im Standbetrieb aber nicht immer ausreichend zur Verfügung, weil im Standbetrieb kein Antriebsmotor läuft, der den Wohnwagen zieht oder das Wohnmobil oder das Boot bewegt. Man ist dann auf Batteriebetrieb, einen mobilen Stromgenerator oder einen elektrischen Landanschluss angewiesen, wie er auf vielen Campingplätzen und in Häfen zur Verfügung steht. Diese Landanschlüsse sind wegen der vielen Verbrauer allerdings erheblichen Leistungsbeschränkungen unterworfen. Viele Landanschlüsse sind auf 1 bis 2 Ampere Stromlieferung begrenzt; Absicherungen oberhalb von 5 Ampere sind eher die Ausnahme; gelegentlich findet man auch 10 Ampere-Absicherungen. Mit solchen Stromstärken lassen sich die vielen elektrischen Verbraucher in modernen mobilen Wohnräumen, wie Kühlschränke, Warm/Kalt-Wassersysteme, Innenbeleuchtung, Küchengeräte und dergleichen, gerade noch betreiben, jedenfalls wenn nicht alle diese Verbraucher gleichzeitig in Betrieb sind. Wenn dann aber noch der Kompressor der Dach-Klimaanlage anspringt, wird häufig die Strombegrenzung überschritten, so dass während der Kühlphasen der Dach-Klimaanlage andere Verbraucher ausgeschaltet bleiben müssen. Diese Phasen können sehr lange dauern, wenn sich der Innenraum zuvor über längere Zeit aufgeheizt hat. Eine Besonderheit mobiler Wohnräume im Standbetrieb besteht nämlich darin, dass ihre Außenfläche im Verhältnis zum Nutzraum sehr groß ist und die Wärmeisoliermöglichkeiten der Außenfläche deutliche Grenzen hat. Im Standbetrieb führt daher Sonneneinstrahlung auch dann zu erheblicher Innenraumaufheizung, wenn sich die Außenlufttemperatur (Umgebungsluft) auf durchaus als angenehm empfundenen Werten befindet.

Davon ausgehend liegt der Erfindung die Aufgabe zugrunde, eine gattungsgemäße Vorrichtung und ein gattungsgemäßes Verfahren derart zu verbessern, dass eine bessere Eignung für verschiedenste klimatische Verhältnisse erreicht wird, ohne dass ein hoher Gesamtstromverbrauch der Klimaanlage in Kauf genommen werden muss.

Zur Lösung dieser Aufgabe wird die Vorrichtung mit den Merkmalen des Anspruchs 1 und das Verfahren mit den Merkmalen des Anspruchs 8 vorgeschlagen.

Die Erfindung basiert auf der Erkenntnis, dass vor allem in Ländern mit verhältnismäßig niedrigem Sonnenstand auch während der Sommerzeit die Sonneneinstrahlungsdauer vergleichsweise lange, die mittlere Tagestemperatur jedoch vergleichsweise kühl ist und sich auf einem Temperaturniveau befindet, das meistens auch für Innenräume als angenehm empfunden werden würde, wenn nicht die lange Sonneneinstrahlung zu einer permanenten Beheizung führen würde. Um nun zu erreichen, dass man vor allem Wohnwagen und Wohnmobile, die gerade wegen ihrer Mobilität sowohl in Gegenden mit sehr warmer Umgebungsluft als auch in Gegenden mit angenehmer oder gar kühler Umgebungsluft benutzt werden, für alle diese klimatisch verschiedenen Verhältnisse klimatechnisch komfortabel ausgestattet sind, ohne dass der eingangs beschriebene hohe Gesamtstromverbrauch in Kauf genommen werden muss, schlägt die Erfindung das Vorsehen von Luft-Umlenkmitteln vor. Diese gestatten es, die Klimaanlage automatisch zwischen Kälteerzeugungsbetrieb und Außenluftkühlbetrieb hin- und herzuschalten, d.h. je nach Temperaturbedingungen unterschiedliche Kühlbetriebe zu verwirklichen, wobei der Kälteerzeugungsbetrieb im Umluftverfahren erfolgt und der Außenluftkühlbetrieb im Luftverdrängungsverfahren erfolgt. Bei letzterem bleibt der Kältemittelkreislauf der Klimaanlage außer Betrieb und die hierfür erforderliche elektrische Energie wird eingespart.

Durch die Erfindung wird also eine verbesserte elektrische Energiehaushaltung von Klimaanlagen für mobile Wohnräume erreicht.

Der japanische Abstract 59209909 beschreibt eine Fahrzeugklimaanlage für den Einbau im Inneren eines motorgetriebenen Fahrzeugs, bei der eine Verminderung der Betriebsdauer und somit des Kraftstoffverbrauchs erreicht werden soll. Wenn eine bestimmte Differenz zwischen Innen- und Außentemperatur unterhalb einer vorgegebenen ist, stoppt der Luftkühlungskreislauf. Gleichzeitig schwenkt eine Luftführungsklappe 13 vom Umluftbetrieb in den Frischluftbetrieb so dass der Fahrtwind zur Kühlung genutzt wird.

Die japanischen Abstracts 57022909 und 56031809 beschreiben eine Fahrzeugklimaanlage, bei der Kältekompressorenergie dadurch gespart wird, dass in Fällen, in denen die Innentemperatur höher als die Außentemperatur ist, eine erhöhte (maximale) Außenluftmenge zur Ventilationssteigerung verwendet wird. Hierzu wird nicht nur die Drehzahl zweier Gebläse zur Erhöhung der Luftgeschwindigkeit vergrößert, sondern auch eine Umluft/Frischluft-Klappe maximal auf Frischluft geöffnet. Hierbei wird die Kompressorkühlung fortgesetzt.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so daß die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung der zugehörigen Zeichnung, in der - beispielhaft - ein Ausführungsbeispiel einer erfindungsgemäßen Dach-Klimaanlage dargestellt ist.

In der Zeichnung zeigen:
- Fig.1: eine Dach-Klimaanlage im Vertikalschnitt schematisch im Kälteerzeugungsbetrieb;
- Fig.2: dieselbe Dach-Klimaanlage im Außenluftkühlbetrieb.

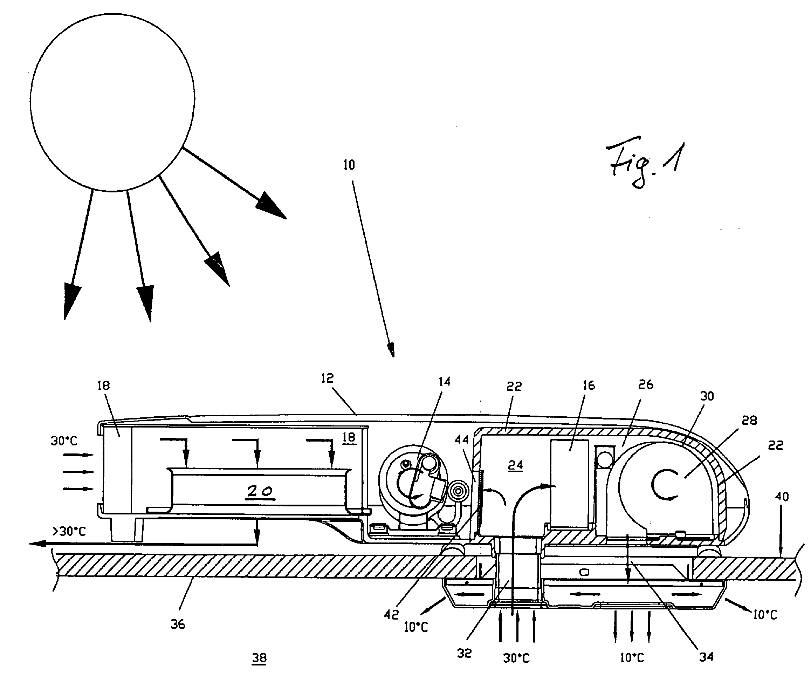

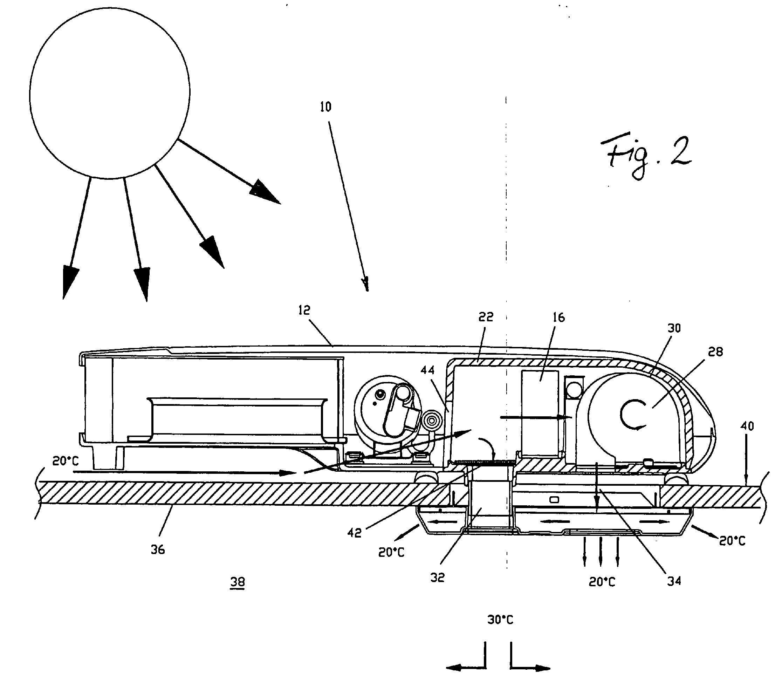

Die dachmontierte Kompaktklimaanlage 10 gem. Fig. 1 und 2 weist innerhalb eines sie im wesentlichen vollständig umhüllenden Schutzgehäuses 12 einen Kältemittelkreislauf, einen geschlossenen Umluftkreislauf und eine offene Kondensatorkühlung auf. Der an sich bekannte Kältemittelkreislauf, dessen Kältemittelleitungen der Übersichtlichkeit halber nicht eigens dargestellt sind, weist einen Kompressor 14, auf seiner Kaltseite einen Verdampfer 16 in Gestalt eines Lamellenwärmeaustauschers und auf seiner Warmseite einen Kondensator 18 mit einem Lüftergebläse 20 auf. Der Kompressor 14 und der Lüfter 20 sind elektrisch betrieben. Die Kaltseite des Kältemittelkreislaufes ist innerhalb des Schutzgehäuses 12 in einem wärmeisolierten Wärmeaustauschergehäuse 22 in der Art untergebracht, dass der Lamellenwärmetauscher den Innenraum des Wärmeaustauschergehäuses 22 in einen Warmraum 24 und einen Kaltraum 26 unterteilt, wobei das Lüfterrad 28 eines elektrisch betriebenen Umluftgebläses 30 für die Durchströmung des Wärmeaustauschergehäuses 22 sorgt, und wobei Strömungsverbindungsöffnungen 32, 34 den Eintritt von Warmluft in den Warmraum 24 und den Austritt von Kaltluft aus dem Kaltraum 26 gestatten. Dabei ist es auch denkbar, den elektrischen Umluftgebläsemotor aus wärmetechnischen Gründen außerhalb des Wärmeaustauschergehäuses 22 anzuordnen und nur das Lüfterrad innerhalb. Diese Kompaktklimaanlage ist auf der Dachfläche 36 eines mobilen Wohnraumes 40, wie eines Wohnwagenanhängers oder eines Wohnmobils, montiert, dessen Innenraum 38 gekühlt werden soll und hierzu innerhalb der Dachfläche 36 Ausström- und Einströmöffnungen aufweist, die mit den Strömungsverbindungsöffnungen 32 und 34 des Wärmeaustauschergehäuses 22 in geeigneter Weise kommunizieren. - Insoweit ist diese Kompaktklimaanlage für Wohnwagendächer in einer am Markt erhältlichen Form bekannt.

Die Besonderheit der erfindungsgemäßen Klimaanlage besteht nun darin, dass sie integrierte Steuermittel zum wahlweisen Umschalten zwischen dem bisher allein bekannten Kälteerzeugungsbetrieb (Fig. 1) und einem Außenluftkühlbetrieb (Fig. 2) aufweist. Hierzu ist zum einen eine innerhalb des Wärmeaustauschergehäuses 22 verstellbare Luftumlenkklappe 42 vorgesehen, die im Klälteerzeugungsbetrieb (Fig. 1) eine mit der Umgebungsluft in Verbindung stehende Außenluftöffnung 44 in einer Wandfläche des Warmraumes 24 möglichst dicht verschließt. Wie aus Fig. 2 ersichtlich, kann diese Luftumlenkklappe 42 in eine zweite Stellung verschwenkt werden, in der sie die Strömungsverbindungsöffnung 32 des Warmraumes 24 zum Innenraum 38 (Wohnraum) einigermaßen dicht verschließt und dabei die Außenluftöffnung 44 freigibt. Vorteilhafterweise sind zu diesem Zweck die Öffnungen 32 und 44 an im Winkel zueinander stehenden Wandbereichen des Warmraumes 24 angeordnet.

Die Funktionsweise im Umluftbetrieb ist in Fig. 1 mit Strömungspfeilen und Temperaturangaben symbolisiert. Dabei wurde beispielhaft davon ausgegangen, dass die Außenlufttemperatur 30° C beträgt und die Innenlufttemperatur zunächst ebenfalls 30°C. Das Absaugen der 30°C warmen Innenluft unter der Wohnraumdecke, Kühlen und Wiederzurückführen dieser Luft im Umluftbetrieb mit z.B. 10°C führt zu einem allmählichen Absenken der Innenraumluft im Großen und Ganzen. Gleichwohl werden an der sonnenbeschienenen Seite des Wohnraumes und unter der Dachfläche stets etwas höhere Temperaturen herrschen als im übrigen Wohnraum, so dass die in den Warmraum 24 der Klimaanlage einströmende Luft auch im Kälteerzeugungsbetrieb eine Temperatur in der Größenordnung von 30°C während längerer Zeitdauer haben kann. Der Kühlmittelkreislauf der Klimaanlage arbeitet daher im Dauerbetrieb, um eine angenehme Innenraumtemperatur zu gewährleisten.

Die Funktionsweise im Außenluftkühlbetrieb (Fig. 2) ist wiederum durch Strömungspfeile symbolisiert, auch hier sorgt das Lüfterrad 28 der Klimaanlage für die erforderliche Luftbewegung. Bei hier beispielhaft vorausgesetzten Außenlufttemperaturen von 20°C und ausgeschaltetem Kältemittelkreislauf wird also diese 20°C Außenluft über den Warmraum 24 und den Kaltraum 26, die sich nun aber auf gleicher Temperatur befinden, über die Einströmöffnung 34 in den Innenraum des Wohnwagens oder Wohnmobils geleitet. Da die Ausströmöffnung 32 nun aber verschlossen ist, arbeitet das Lüfterrad 28 geringfügig im Überdruckbetrieb, so dass die von ihm transportierte Außenluft die Innenraumluft durch die vorhandenen Lüftungsverbindungen des Innenraums zur Umgebungsluft hin verdrängt. Bei fortgesetzter Sonneneinstrahlung wird dem Innenraum 38 auch hier immer neue Wärmeenergie über die sonnenbeschienene Seite zugeführt und in diesen Bereichen die Innenraumluft aufgeheizt. Dies wirkt sich aufgrund der permanenten Innenraumluftverdrängung durch das Lüfterrad 28 jedoch nicht nachteilig aus, so dass eine weitestgehend angenehme Innenraumtemperatur aufrecht erhalten werden kann, ohne dass der Kältemittelkreislauf in Betrieb ist.

Natürlich ist es möglich, im Außenluftkühlbetrieb z.B. durch Luftbefeuchtung eine zusätzliche Verdunstungskühlung vorzusehen, die ebenfalls nur sehr geringe elektrische Betriebsenergie benötigt.

Über eine im einzelnen nicht dargestellte Temperatursteuerung, insbesondere unter Einsatz von Außenraum- und Innenraumtemperaturfühlem kann diese Klimaanlage völlig automatisch betrieben und zwischen ihren Betriebsarten hin- und hergesteuert werden. Liegt z.B. die Innenraumtemperatur 2°C oberhalb der Außentemperatur, wird die Klimaanlage besonders energiesparend im Außenluftkühlbetrieb betrieben. Liegt die Außentemperatur jedoch in der Größenordnung der Innenraumtemperatur oder etwa 2°C höher, so muss auf Kälteerzeugungsbetrieb umgeschaltet werden, um auf eine vorgegebene und als angenehm empfundene Innenraumtemperatur zu kommen.

Während vorangehend die erfindungsgemäße Klimaanlage dachmontiert dargestellt ist, gehören auch an anderer Stelle montierte erfindungsgemäße Klimaanlagen zum Gegenstand der Erfindung. Regelmäßig wird man eine derartige Kompaktklimaanlage an der platz- und kältetechnisch günstigsten Stelle an den Innenraum anbauen und ggf. auch in die allgemeine Außenkontur des Wohnwagens oder Wohnmobils einbeziehen. Auch ist es möglich, für den Außenluft-Kühlbetrieb ein oder mehrere, steuerbare oder permanente, Zwangsentlüftungsöffnungen in eine derartige Kompaktklimaanlage zu integrieren.

Während die Erfindung vorangehend für den Standbetrieb, d.h. den nicht-mobilen Zustand des mobilen Wohnraumes, wie Wohnwagen, Wohnmobile und dergleichen, beschrieben worden ist, kann im Fahrbetrieb aufgrund der Fahrtwindkühlung und des höheren Angebots an elektrischer Energie der Klimaanlagenbetrieb auch anders als im Standbetrieb erfolgen. Ebenso kann im Standbetrieb, z.B. bei guter elektrischer Stromversorgung, auf eine andere Betriebsart umgeschaltet werden. Auch ein Mischbetrieb von Umluft und Verdrängungsluftbetrieb kann durchaus vorgesehen werden.

### Bezugszeichenliste

- 10: Klimaanlage
- 12: Schutzgehäuse
- 14: Kompressor
- 16: Verdampfer
- 18: Kondensator
- 20: Lüftergebläse
- 22: Wärmeaustauschergehäuse
- 24: Warmraum
- 26: Kaltraum
- 28: Lüfterrad
- 30: Umluftgebläse
- 32: Strömungsverbindungsöffnung
- 34: Strömungsverbindungsöffnung
- 36: Dachfläche
- 38: Innenraum
- 40: mobiler Wohnraum
- 42: Luftumlenkklappe
- 44: Außenluftöffnung

## Patentansprüche

1. Außen an einem mobilen Wohnraum, wie einem Wohnwagen, Wohnmobile, Boot und dergleichen anbringbare Kompaktklimaanlage zum Kühlen im Standbetrieb, d.h. im nicht-mobilen Zustand, bestehend aus
einem gebläsegetriebenen Umluftkreislauf mit einem, insbesondere wärmeisolierten, Wärmeaustauschergehäuse (22) zur Aufnahme des Verdampfers (16) des Kältemittelkreislaufes und zum Durchströmen und Kühlen eines Umluftstromes zwischen Einström- und Ausströmverbindungsöffnungen zum Innenraum/Wohnraum, und aus
einem Kältemittelkreislauf mit einem durch ein weiteres Gebläse (20) gekühlten Kondensator (18) auf der Warmseite und einem Verdampfer (16) auf der Kaltseite eines Kompressors (14),
bei der zumindest der Kondensator (18), der Kompressor (14) und das weitere Gebläse (20) außerhalb des Wärmeaustauschgehäuses (22) angeordnet sind, bei dem
mindestens ein Luftumlenkmittel zum wahlweisen Öffnen mindestens einer Außenluftöffnung (44) des Wärmeaustauschergehäuses (22) und Einleiten von Außenluft in den Innenraum (38) und zum Unterbrechen des Umluftstromes durch Schließen der Einströmverbindungsöffnung (32), so lange die Außenlufttemperatur einen vorgegebenen Wert nicht überschreitet, sowie Steuermittel zum Außenbetriebsetzen des Kältemittelkreislaufes während dieses Außenluftkühlbetriebes vorgesehen sind.

2. Kompaktklimaanlage nach Anspruch 1, **gekennzeichnet durch** eine Steuerung zum automatischen Betätigen des mindestens einen Luftumlenkmittels in Abhängigkeit zu der Außenlufttemperatur und/oder der Wohnraumtemperatur.

3. Kompaktklimaanlage nach Anspruch 1 oder 2, **dadurch gekennzeichnet, dass** das mindestens eine Luftumlenkmittel eine steuerbare Klappe (42) ist.

4. Kompaktklimaanlage nach einem der Ansprüche 1 bis 3, **dadurch gekennzeichnet, dass** das Luftumlenkmittel in einer ersten Extremstellung, die mindestens eine Außenluftöffnung (44) des Wärmeaustauschergehäuses (22) und einer zweiten Extremstellung die Einströmverbindungsöffnung (32) des Wärmeaustauschergehäuses (22) verschließt,

5. Kompaktklimaanlage nach einem der Ansprüche 1 bis 4, **dadurch gekennzeichnet, dass** ein Luftfördermittel, wie ein Lüfterrad (28), für den Umluftkreislauf innerhalb des Wärmeaustauschergehäuses (22) und dessen Antriebsmittel zumindest teilweise außerhalb desselben angeordnet ist.

6. Kompaktklimaanlage nach einem der Ansprüche 1 bis 5, **dadurch gekennzeichnet, dass** eine oder mehrere, steuerbare oder permanente, Zwangsentlüftungsöffnung/en für den Außenluft-Kühlbetrieb in die Klimaanlage integriert ist/sind.

7. Kompaktklimaanlage nach einem der Ansprüche 1 bis 6, **dadurch gekennzeichnet, dass** ein die Kompaktklimaanlage im wesentlichen vollständig umhüllendes Schutzgehäuse (12) vorgesehen ist.

8. Standbetriebkühlverfahen eines mobilen Wohnraumes wie eines Wohnwagens, Wohnmobiles, Bootes und dergleichen, bei dem die Wohnraumluft nach außen und entlang eines Verdampfers eines von einem Kompressor, dem Verdampfer, einem Kondensator und zwei, dem Verdampfer bzw. dem Kondensator zugeordneten Gebläsen betriebenen Kältemittelkreislaufes geführt und gekühlt wird und die gekühlte Luft im Umluftbetrieb wieder nach innen in den Wohnraum geführt wird, wobei der Kompressor und das dem Kondensator zugeordnete Gebläse des Kältemittelkreislaufes nur bei Überschreiten eines bestimmten, ggf. von der Innenraumtemperatur abhängigen, Außenlufttemperaturwertes bei gleichzeitigem Umluftbetrieb betrieben wird und der Umluftbetrieb bei Unterschreiten des bestimmten oder eines ähnlichen Außentemperaturwertes unterbrochen und Außenluft als Kühlluft im Verdrängungsbetrieb nach innen in den Wohnraum geführt wird, und wobei im Außenluftkühlbetrieb der Kompressor und das dem Kondensator zugeordnete Gebläse abgeschaltet sind.

9. Standbetriebkühlverfahren nach Anspruch 8, **dadurch gekennzeichnet, dass** im Außenluftkühlbetrieb das dem Umluftkreislauf zugeordnete Gebläse einen geringfügigen Überdruck erzeugt.

10. Standbetriebkühlverfahren nach Anspruch 8 oder 9, **dadurch gekennzeichnet, dass** im Außenluftkühlbetrieb eine zusätzliche Verdunstungskühlung vorgesehen ist.

## Claims

1. Compact air-conditioning system, which can be attached externally to a mobile living space, such as a caravan, mobile home, boat or similar, for cooling during the stationary mode, that is, in the non-mobile condition, comprising:
a fan-driven ambient-air circulation with a heat-exchanger housing (22), especially a thermally-insulated heat-exchanger housing (22), for the accommodation of an evaporator (16) of a cooling-medium circulation and for the through-flow and cooling of an ambient-air stream between in-flow and out-flow connecting openings to the interior space/living-room, and further comprising;
a cooling-medium circulation with a condenser (18) cooled by a further fan (20) at the hot end and the evaporator (16) at the cold end of a compressor (14);
wherein at least the condenser (18), the compressor (14) and the further fan (20) are arranged outside the heat-exchanger housing (22);
wherein at least one air-deflection means for the selectable opening of at least one external-air opening (44) of the heat-exchanger housing (22) and introduction of external air into the interior space (38) and for the interruption of the ambient-air flow by closing the in-flow connecting opening (32), so long as the external-air temperature does not exceed a specified value, and wherein control means are provided in order to switch off the cooling-medium circulation during this external-air cooling mode.

2. Compact air-conditioning system according to claim 1,
**characterised by**
a control unit for the automatic activation of the at least one air-deflection means dependent upon the external-air temperature and/or the living-room temperature.

3. Compact air-conditioning system according to claim 1 or 2,
**characterised in that**
the at least one air-deflection means is a controllable flap (42).

4. Compact air-conditioning system according to any one of claims 1 to 3,
**characterised in that**,
in a first extreme position, the air-deflection means closes the at least one external-air opening (44) of the heat-exchanger housing (22), and in a second extreme position, closes the in-flow connecting opening (32) of the heat-exchanger housing (22).

5. Compact air-conditioning system according to any one of claims 1 to 4,
**characterised in that**
an air pumping means, such as a ventilator wheel (28), is arranged, for the ambient-air circulation within the heat-exchanger housing (22) and its drive means, at least partially outside the same.

6. Compact air-conditioning system according to any one of claims 1 to 5,
**characterised in that**
one or more, controllable or permanent, forced ventilation openings for the external-air cooling mode are integrated in the air-conditioning system.

7. Compact air-conditioning system according to any one of claims 1 to 6,
**characterised in that**
a protective housing (12) essentially completely enclosing the compact air-conditioning system is provided.

8. Stationary-mode cooling method for a mobile living space such as a caravan, mobile home, boat and similar, wherein the living-room air is guided to the outside and along an evaporator of a cooling-medium circulation operated by a compressor, the evaporator, a condenser and two fans allocated to the evaporator and the condenser respectively, and cooled, and wherein, in the ambient-air mode, the cooled air is guided back inside into the living room; wherein the compressor and the fan of the cooling-medium circulation allocated to the condenser is operated only when a given, external-air temperature value, optionally dependent upon the internal room temperature, is exceeded at the same time as the ambient-air mode; and the ambient-air mode is interrupted if the temperature falls below the specified external-temperature value or a similar external-temperature value, and, in the displacement mode, external air is guided inside into the living room as cooling air; and wherein the compressor and the fan allocated to the condenser are switched off in the external-air cooling mode.

9. Stationary-mode cooling method according to claim 8,
**characterised in that**,
in the external-air cooling mode, the fan allocated to the ambient-air circulation generates a slight positive pressure.

10. Stationary-mode cooling method according to claim 8 or 9,
**characterised in that**
an additional evaporation cooling is provided in the external-air cooling mode.

## Revendications

1. Installation compacte de climatisation à monter à l'extérieur d'espaces mobiles, tels que caravanes, camping-cars, bateaux et similaires, pour la réfrigération en service stationnaire, c'est-à-dire à l'état non mobile, comprenant :
- un circuit de circulation d'air actionné par soufflerie, comportant un boîtier (22) d'échangeur thermique, en particulier muni d'une isolation thermique, pour le logement de l'évaporateur (16) du circuit de réfrigérant ainsi que pour la traversée et le refroidissement d'un flux d'air en circulation entre des ouvertures de liaison de l'entrée et de la sortie, dirigées vers l'espace intérieur, et
- un circuit de réfrigérant comportant un condenseur (18) du côté chaud, refroidi par une autre soufflerie (20), et un évaporateur (16) du côté froid d'un compresseur (14),
dans laquelle
le boîtier a au moins le condenseur (18), le compresseur (14) et l'autre soufflerie (20) sont disposés en dehors du boîtier (22) d'échangeur thermique, et
le boîtier a au moins un moyen de changement de direction de l'air pour ouvrir facultativement au moins une ouverture d'air extérieur (44) du boîtier (22) d'échangeur thermique et introduire de l'air extérieur dans l'espace intérieur (38) ainsi que pour interrompre le flux d'air en circulation par fermeture de l'ouverture de liaison de l'entrée (32), tant que la température de l'air extérieur ne dépasse pas une valeur prédéterminée, ainsi que des moyens de commande pour mettre hors service le circuit de réfrigérant pendant ce fonctionnement de refroidissement de l'air extérieur.

2. Installation compacte de climatisation selon la revendication 1,
**caractérisée par**
une commande d'actionnement automatique d'au moins un moyen de changement de direction de l'air en fonction de la température de l'air extérieur et/ou de la température de l'espace intérieur.

3. Installation compacte de climatisation selon la revendication 1 ou 2,
**caractérisée en ce que**
l'au moins un, moyen de changement de direction de l'air est un clapet (42) commandé.

4. Installation compacte de climatisation selon l'une des revendications 1 à 3,
**caractérisée en ce que**
le moyen de changement de direction de l'air ferme, dans une première position extrême, au moins une ouverture d'air extérieur (44) du boîtier (22) d'échangeur thermique et, dans une seconde position extrême, l'ouverture de liaison d'entrée (32) du boîtier (22) d'échangeur thermique.

5. Installation compacte de climatisation selon l'une des revendications 1 à 4,
**caractérisée en ce qu'**
un moyen de transport d'air, tel qu'un rotor de ventilateur (28), pour le circuit de circulation d'air, est disposé à l'intérieur du boîtier (22) d'échangeur thermique et son moyen d'entraînement est disposé au moins en partie en dehors de celui-ci.

6. Installation compacte de climatisation selon l'une des revendications 1 à 5,
**caractérisée en ce qu'**
on intègre dans le système de climatisation une ou plusieurs ouvertures d'évacuation forcée de l'air, commandées ou permanentes, pour le refroidissement de l'air extérieur.

7. Installation compacte de climatisation selon l'une des revendications 1 à 6,
**caractérisée par**
un boîtier de protection (12) qui enveloppe sensiblement de façon complète l'installation compacte de climatisation.

8. Procédé de réfrigération en service stationnaire d'un espace mobile, tel qu'une caravane, un camping-car, un bateau et similaire, selon lequel on guide vers l'extérieur l'air de l'espace refroidi le long d'un évaporateur d'un circuit de réfrigérant entraîné par un compresseur, l'évaporateur, un condenseur et deux souffleries associées à l'évaporateur ou au condensateur, et l'air refroidi dans le fonctionnement de l'air en circulation est dirigé à nouveau vers l'intérieur dans l'espace, et dont le compresseur et la soufflerie du circuit de réfrigérant associée au condensateur fonctionnent seulement lorsqu'une valeur déterminée de la température de l'air extérieur, dépendant le cas échéant de la température de l'espace intérieur, est dépassée, avec fonctionnement simultané de l'air en circulation, et on interrompt le fonctionnement de l'air en circulation lorsque la valeur déterminée ou une valeur similaire de la température extérieure n'est pas atteinte, et on dirige l'air extérieur vers l'intérieur dans l'espace en tant qu'air froid dans le fonctionnement en refoulement alors que, pendant le fonctionnement de refroidissement de l'air extérieur, le compresseur et la soufflerie associée au condenseur ne fonctionnent pas.

9. Procédé de réfrigération en service stationnaire selon la revendication 8,
**caractérisé en ce que**
pendant le fonctionnement de refroidissement de l'air extérieur, la soufflerie associée au circuit de circulation d'air produit une légère surpression.

10. Procédé de réfrigération en service stationnaire selon la revendication 8 ou 9,
**caractérisé en ce qu'**
on prévoit une réfrigération supplémentaire par évaporation pendant le fonctionnement de refroidissement de l'air extérieur.
